# EUROPEAN PATENT APPLICATION

(11) **EP 3 127 799 A1**
(43) Date of publication of application: **08.02.2017**
(21) Application number: 15180307.9
(22) Date of filing: 07.08.2015
(51) Int. Cl.: B62M 9/123, B62M 9/133

(54) **AUTOMATIC GEAR SELECTION FOR MULTI-GEARED, PEDAL-OPERATED VEHICLES**

(71) Applicant: Mastracci, Armando, Toronto, Ontario M6S 3W9 (CA)
(72) Inventor: Mastracci, Armando, Toronto, Ontario M6S 3W9 (CA)
(74) Representative: Patel, Binesh

(57) **Abstract**

A microprocessor (202) may consider difficulties in changing gears, for a multi-geared, pedal-operated vehicle, within the limits placed on the gear shifting due to fatigue, pedaling rate (cadence), torque placed in the pedals (115L,115R) and the speed of the multi-geared, pedal-operated vehicle. These limitations may be into consideration in determining, in real-time, suitable gear choices for an operator of the multi-geared, pedal-operated vehicle.

## Description

### CROSS-REFERENCE TO RELATED APPLICATIONS

The present application claims priority to U.S. Provisional Patent Application No. 62/035,275, filed August 8, 2014, the contents of which are hereby incorporated herein by reference.

### FIELD

The present application relates generally to multi-geared, pedal-operated vehicles and, more specifically, to gear selection for these vehicles.

### BACKGROUND

The challenge of choosing the appropriate gear, from a set of available gears on a multi-geared, pedal-operated vehicle such as a bicycle, is a difficult one for many cyclists. For the recreational cyclist that is new to cycling, the choices are confusing and the choice of which gear is best is something that takes time to learn. For the competitive cyclist, there are varying degrees of physiological impact from the choices of gears on a bicycle, with some choices placing greater physiological strain on the cyclist than other choices.

Choosing the appropriate gear on vehicles with traditional derailleur-based gearing systems, with many gears to choose from, depends both on the available gears but also on the context in which the choice is being made. There are limitations based on pedaling rates and torques at which gear changes can be completed without encountering gearing issues.

Electronically-assisted bicycles, tricycles and quadracylces pose greater demands on the cyclist in selecting the appropriate gear given the higher variation in speed one experiences while riding these vehicles.

### SUMMARY

An aspect of the present application relates to determining an appropriate gear for given demands and determining the manner in which the gear should be changed from the current gear to the appropriate gear to meet the given demands. The appropriate gear may be based on relationship between data received from one or more sensors on the bicycle - such as a power sensor, a cadence sensor, a speed sensor - and data from one or more sensors on the cyclist - such as heart-rate sensor - as well as configuration parameters specific to the cyclist, configuration parameters specific to the vehicle and cycling conditions. When used in combination with a system that can electronically shift gears, the system may act to automatically and intelligently shift gears on behalf of the cyclist.

Conveniently, cyclists, both recreational and competitive, may be enabled by aspects of the present application to have an optimum gear chosen on their behalf as they ride. Recreational cyclists, particularly those new to cycling with derailleur systems, may enjoy the freedom of simply pedaling without having to worry about choosing the right gear. Competitive cyclists may, in competitions, benefit by seeing a reduction in the physiological impact associated with incorrect, sub-optimal gear choices.

An aspect of this present application relates to considering difficulties in changing gears within the limits placed on the gear shifting due to pedaling rate (cadence), torque placed in the pedals and the speed of the bicycle. The present application may take these limitations into consideration in determining, in real-time, suitable gear choices for the cyclist.

An aspect of this present disclosure relates to the use of intelligent gear selection on a multi-geared, pedal-operated vehicle that come in various forms such as on a bicycle, tricycle, quadracycle or electronically-assisted versions of such vehicles.

According to an aspect of the present disclosure, there is provided a method of advising gear changes for a multi-geared, pedal-operated vehicle such as a bicycle. The method includes obtaining configuration data specific to a rider of the vehicle, the configuration data including a configuration cadence associated with a given power and receiving sensor data, the sensor data including: sensor data representative of measured speed; and sensor data representative of measured power. The method further includes determining, based on the configuration data and the sensor data, a fatigue factor, determining, based on the sensor data representative of the measured speed, a predicted speed and determining, based on the measured power, the configuration data and the fatigue factor, a target cadence. The method further includes determining, based on the target cadence and the predicted speed, a target gear ratio, determining, based the target gear ratio and on available gears, a change in gearing, controlling a display to indicate the change in gearing and controlling an audio device to indicate the change in gearing.

According to an aspect of the present disclosure, there is provided a method of advising gear changes for a multi-geared, pedal-operated vehicle such as a bicycle. The method includes obtaining configuration data specific to a rider of the vehicle, the configuration data including a configuration cadence associated with a given torque and receiving sensor data, the sensor data including: sensor data representative of measured speed; and sensor data representative of measured torque. The method further includes determining, based on the configuration data and the sensor data, a fatigue factor, determining, based on the sensor data representative of the measured speed, a predicted speed and determining, based on the measured torque, the configuration data and the fatigue factor, a target cadence. The method further includes determining, based on the target cadence and the predicted speed, a target gear ratio, determining, based the target gear ratio and on available gears, a change in gearing, controlling a display to indicate the change in gearing and controlling an audio device to indicate the change in gearing.

In other aspects of the present application, a processor is provided for carrying out this method and a computer readable medium is provided for adapting a processor in a mobile computing device to carry out this method.

Other aspects and features of the present disclosure will become apparent to those of ordinary skill in the art upon review of the following description of specific implementations of the disclosure in conjunction with the accompanying figures.

### BRIEF DESCRIPTION OF THE DRAWINGS

Reference will now be made, by way of example, to the accompanying drawings which show example implementations; and in which:
FIG. 1 illustrates, schematically, an example multi-geared, pedal-operated vehicle and a system in accordance with an embodiment of the present application;
FIG. 2 illustrates, schematically, inputs, processes and outputs of the system of FIG. 1;
FIG. 3 illustrates, in block diagram format, a controller for the system of FIG. 1 and a plurality of interfaces for the system of FIG. 1;
FIG. 4 illustrates, in flow diagram format, example steps in a method of determining an appropriate gear based on real-time sensor data in accordance with an embodiment of the present application;
FIG. 5 illustrates, in flow diagram format, example steps in a method of determining a target cadence in accordance with an embodiment of the present application;
FIG. 6 illustrates, in flow diagram format, example steps in a method of determining an optimal gear in accordance with an embodiment of the present application;
FIG. 7 illustrates, in flow diagram format, example steps in a method of determining an optimal timing for a gear change in accordance with an embodiment of the present application;

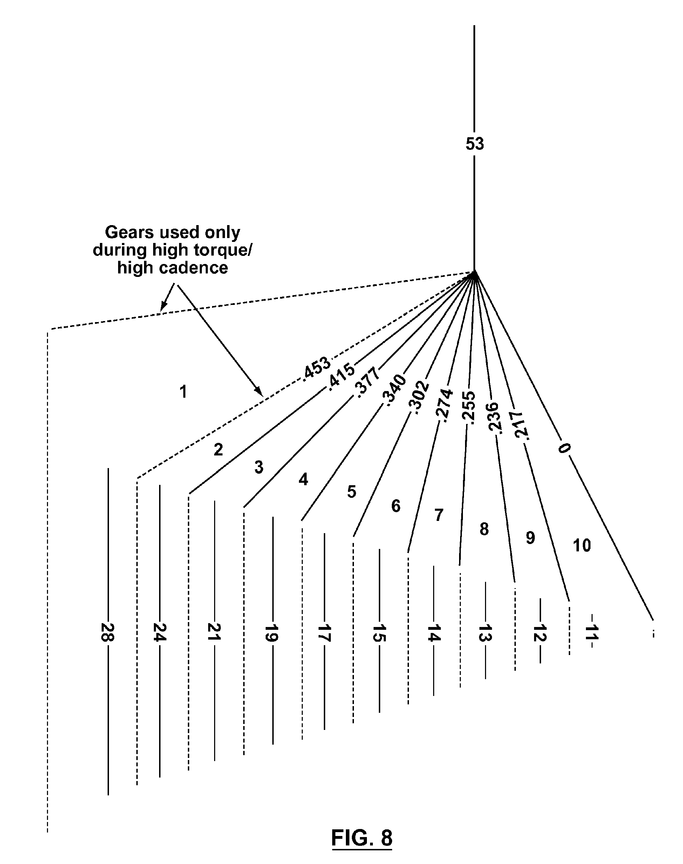

FIG. 8 illustrates a representative example of gear ratios available with an outer, big chainring; and

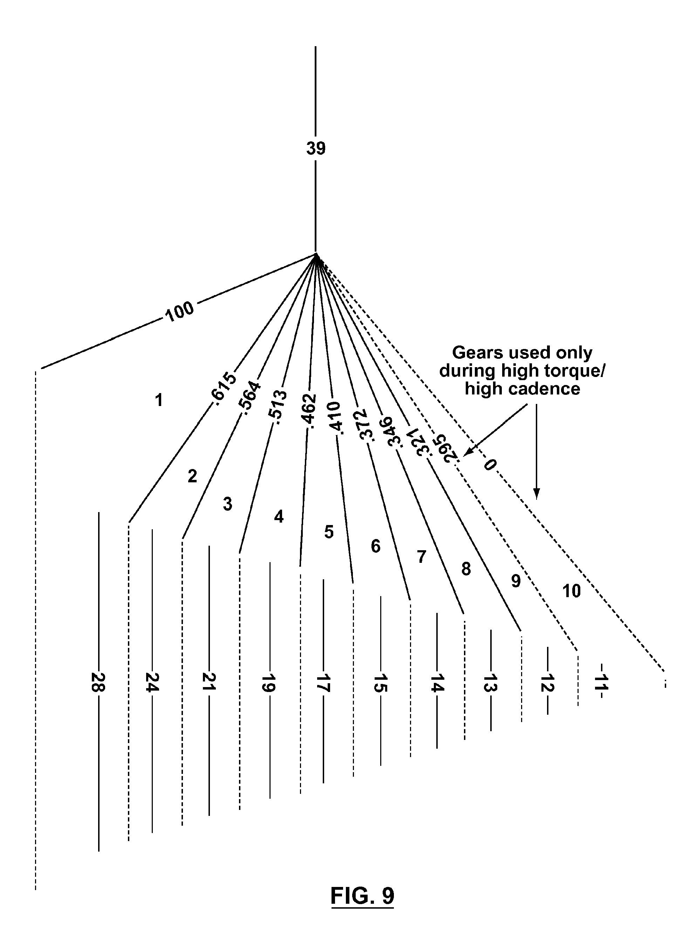

FIG. 9 illustrates a representative example of gear ratios available with an inner, small chainring.

### DETAILED DESCRIPTION

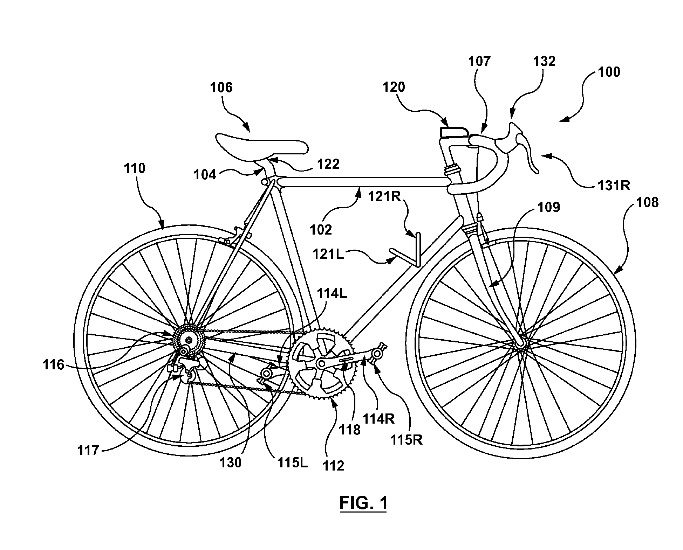

Referring initially to FIG. 1, there is illustrated a multi-geared, pedal-operated vehicle depicted as a bicycle100. The bicycle 100 includes a frame 102, a front wheel 108, a rear wheel 110 and a chainring assembly 112. The chainring assembly 112 includes an outer chainring and an inner chainring. A bottom bracket axle extends through a hub of the frame 102. The bottom bracket axle is keyed to the outer chainring and to the inner chainring. The frame 102 receives a seat tube 104 supporting a seat 106. At the front of the bicycle 100, handlebars 107 connect to forks 109 through the frame 102. The forks 109 support an axle for the front wheel 108.

The frame 102 also includes horizontally and rearwardly extending frame members, which frame members support an axle for the rear wheel 110 and derailleur assembly 117 associated with the bicycle 100.

A left crank arm 114L and a right crank arm 114R are associated with the chainring assembly 112. The right crank arm 114R is mounted to the outer chainring and to the inner chainring and to the bottom bracket axle. The left crank arm 114L is directly mounted to the bottom bracket axle. The crank arms 114L and 114R receive, at their respective ends remote from the axle to which they are mounted, pedals 115L and 115R.

A multi-armed piece that connects the chainring assembly 112 to the bottom bracket axle may be called a crank spider.

The bicycle 100 of FIG. 1 is equipped with a rear wheel cassette 116 that has a set of sprockets. Sprockets may also be known as cogs. As is conventional, the rear wheel cassette 116 may be fastened to the axle for the rear wheel 110. A chain connects the chainring assembly 112 to the rear wheel cassette 116 to allow for transmission of rotation.

The bicycle 100 of FIG. 1 is also equipped with a torque sensor 118. The torque sensor 118 may, for a non-limiting example, take the form of a strain gauge mounted on the right crank arm 114R. Functionally, the torque sensor 118 may provide a measure of a torque applied to the right crank arm 114R.

The bicycle 100 of FIG. 1 may be further equipped with a speed sensor (not shown in FIG. 1). The speed sensor may, for a non-limiting example, take the form of a magnet (not shown) attached to the rear wheel 110 and a reed switch (not shown) mounted on the chainstay 130. The passing of the magnet over the reed switch signals a revolution of the rear wheel 110, thus enables speed to be sensed through determining a number of rotations per time period.

The bicycle 100 of FIG. 1 may also be equipped with a power sensor (not shown). Modern examples of equipment that may be used for the power sensor include sensors that mount to the rear wheel 110, mount to the crank spider, mount to the crank arms 114L, 114R and mount to the pedals 115L, 115R.

In most cases the power sensor and the torque sensor 118 are the same sensor. Power can be derived when torque and cadence are known. Alternatively, torque can be derived when power and cadence are known. As will be discussed hereinafter, the bicycle 100 of FIG. 1 may also be equipped with a cadence sensor, such that the known relationship between power, torque and cadence may be employed.

The bicycle 100 of FIG. 1 may also be equipped with a crank position sensor (not shown). The crank position sensor may be implemented as a reed switch with a corresponding magnet (not shown) attached to a spoke on the wheel, as is known.

The bicycle 100 of FIG. 1 may also be equipped with a cadence sensor (not shown in FIG. 1). Implementation of the cadence sensor may involve mounting a magnet (not shown) to one of the crank arms 114L, 114R and mounting a reed switch (not shown) to the frame 102.

The bicycle 100 of FIG. 1 may also be equipped with manually operated gear shifters including a front derailleur manual shifter 121 L, mounted on the left side of the bicycle 100, and a rear derailleur manual shifter 121 R, mounted on the right side of the bicycle 100. In a typical fashion, the front derailleur manual shifter 121 L may be employed to change a selected chainring in the chainring assembly 112 and the rear derailleur manual shifter 121 R may be employed to change a selected cog in the rear wheel cassette 116.

Similarly, the bicycle 100 of FIG. 1 may be equipped with electronic gear shifters including a front derailleur electronic shifter (not shown), incorporated into a front brake activator mounted on the left side of the bicycle 100, and a rear derailleur electronic shifter 131 R, incorporated into a rear brake activator mounted on the right side of the bicycle 100. In a typical fashion, the front derailleur electronic shifter may be employed to change a selected chainring in the chainring assembly 112 and the rear derailleur electronic shifter 131 R may be employed to change a selected cog in the rear wheel cassette 116.

Mounted to the handlebars 107 may be a controller 120 with a visual display, a plurality of buttons and a speaker. Indeed, the controller 120 may be implemented as a smart phone executing a controller application.

Associated with the seat 106 and the seat tube 104 may be a saddle sensor 122.

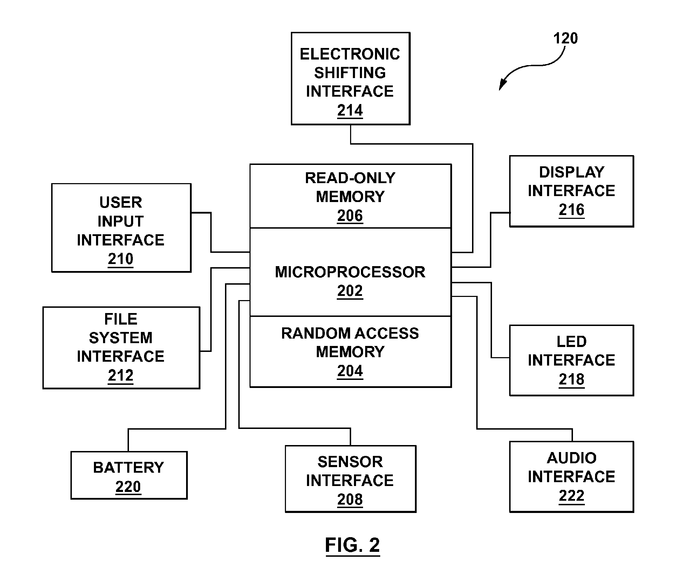

With reference to FIG 2, the controller 120 may be constructed with a microprocessor 202 that may have random access memory (RAM) 204 as well as read-only memory (ROM) 206. The microprocessor 202 may be programmed to carry out algorithms and logic described herein and stored as instructions in the RAM 204 or the ROM 206. The RAM 204 may be used to store sensor information and additional real-time information coming from a sensor interface 208 and a user input interface 210 in addition to data that may have been calculated from these data. Information in the RAM 204 may include the currently chosen gear, the current fatigue level, previous sensor data used for average calculations, preferences and configuration information and other data related to interfacing with external devices. The sensor interface 208 may connect to the sensors used on the bicycle 100, such as the power/torque sensor 118, the cadence/crank arm position sensor and speed sensor. The sensor interface 208 may connect to a GPS sensor may be interfaced when the controller is to be programmed to maintain power levels according to sensed GPS coordinates. The sensor interface 208 may connect to the crank arm position sensor to provide precise angular locations of the crank arms 114L, 114R. The sensor interface 208 may connect to the saddle sensor 122 to receive data representative of whether the cyclist is standing on the pedals 115R, 115L or sitting on the seat 106. The sensor interface 208 may connect to a heart-rate monitor (not shown) to provide heart-rate data of the cyclist.

A file system interface 212 may connect to a device that stores files that have been created outside of the controller 120, such as on a personal computer (not shown). Such files may contain configuration information that instructs the controller 120 regarding a manner in which to perform various functions. Example file system interfaces 212 can interface with Flash storage devices, Secure Digital (SD) cards, Universal Serial Bus (USB) file systems or ANT+ file systems. ANT+ is a sub-system of a base protocol ("ANT") designed and marketed by the ANT+ Alliance, a division of Dynastream Innovations Inc. of Cochrane, Canada. ANT is a proprietary, open access, multicast, wireless sensor network technology designed and marketed by ANT Wireless, which is a division of Dynastream Innovations Inc. of Cochrane, Canada.

The microprocessor 202 may be programmed to read configuration information via the file system interface 212. In addition to obtaining configuration information, the microprocessor 202 may store, via the file system interface 212, a log of interactive data obtained during the processing performed by the microprocessor 202.

The user interface 210 may be connected to the microprocessor 202 to enable inputs and changes of configuration and for real-time instructions from the cyclist to the microprocessor 202. The user interface 210 may take the form of buttons, touch-screen input or other forms of input that enable the cyclist to communicate information to the microprocessor 202.

An electronic shifting interface 214 may enable the microprocessor 202 to communicate with an electronic shifting system, to be discussed hereinafter.

A display interface 216 may be connected to the microprocessor 202 such that information that is relevant to the operation of the controller 120 may be displayed via the display interface 216 to the cyclist in real-time or in preparation for a ride.

An audio interface 222 may be connected to the microprocessor 202 such that information that is relevant to the operation of the controller 120 may be emitted audibly to the cyclist in real-time or in preparation for a ride.

The controller 120 may contain a battery 220, which may or may not be of the rechargeable kind, to provide power to the microprocessor 202 and other components that require power.

The microprocessor 202 may be programmed to obtain the configuration information via the file system interface 212 upon startup of the controller 120. Connections to available sensors via the sensor interface 208 may be established by the microprocessor 202. The microprocessor 202 may be programmed to display information related to the success or failure of such actions on the display interface 216.

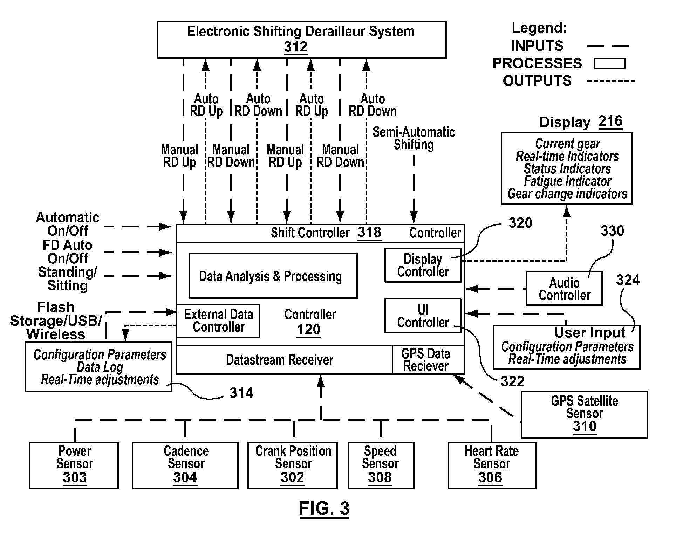

FIG. 3 provides a schematic view of the controller 120 and various system elements with which the controller 120 interacts. As illustrated in FIG. 3, the controller 120 may interact with many distinct sensors, including the power sensor 303, a cadence sensor 304, a crank position sensor 302, a speed sensor 308, a heart rate sensor 306 and a Global Positioning System (GPS) satellite sensor 310. In view of FIG. 3, it may be noted that the controller 120 communicates with an electronic shifting derailleur system 312.

In operation, the microprocessor 202 may be programmed to operate by continuously receiving user input information from various user input devices and electronic shifting system. The microprocessor 202 may also receive data from various sensors and perform the functions described herein until the controller 120 is switched off. The microprocessor 202 may be programmed to concurrently perform other functions typically performed on smart phone devices.

With reference to FIG. 3, the controller 120 may be implemented as an smart phone or bicycle computer that interfaces with sensors and enables input via an input device or via other input devices readily accessible to the cyclist during the process of riding the bicycle. Input devices may be in the form of switches placed on the handlebars.

Functionally, the controller 120 includes a data controller 316 adapted to receive or store data 314, such as configuration parameters, a data log and real-time adjustments. The controller 120 also includes a shift controller 318 adapted to communicate with the electronic shifting derailleur system 312. The controller 120 also includes a display controller 320 adapted to communicate with the display interface 216. The controller 120 also includes an audio controller 330 to communicate audible signals. In operation, the display interface 216 may be controlled by the controller 120 to show such information as current gear, real-time status indicators, a fatigue information and gear change indicators.

The controller 120 also includes a user interface (UI) controller 322 adapted to receive user input 324. The user input 324 may, for example, include configuration parameters and real-time adjustments.

In overview, aspects of the present application relate to determining an appropriate gear for given demands and determining the manner in which the gear should be changed from the current gear to the appropriate gear to meet the given demands. The appropriate gear may be based on relationship between data received from one or more sensors on the bicycle and data from one or more sensors on the cyclist as well as configuration parameters specific to the cyclist, configuration parameters specific to the bike and cycling conditions.

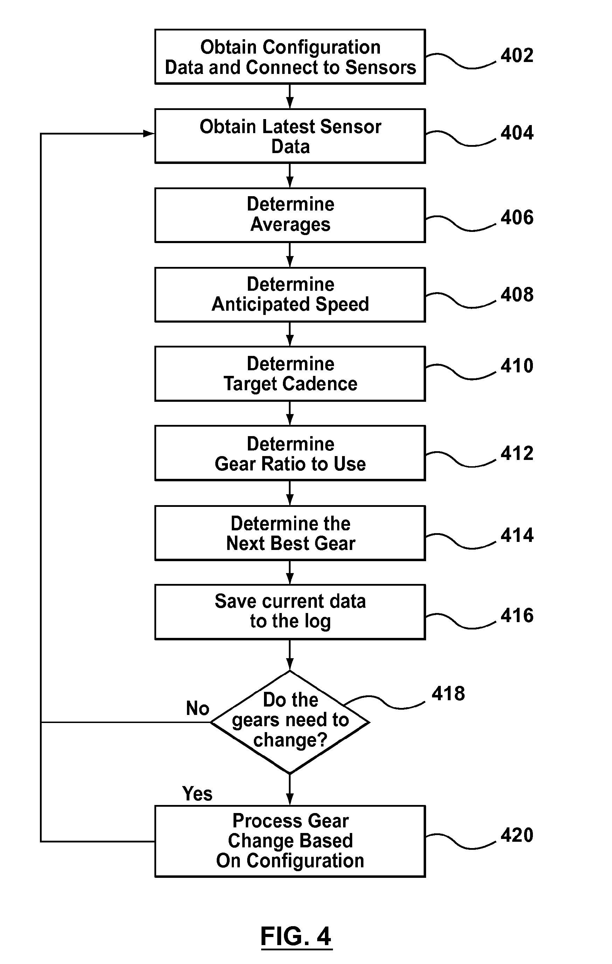

FIG. 4 illustrates example steps in a method of operating the controller 120. Operation of the controller 120 may commence when the controller 120 is switched on. The microprocessor 202 may obtain (step 402) configuration information and establish connections to available sensors. The microprocessor 202 may obtain (step 402) the configuration information either directly or by inference. To obtain (step 402) the configuration information directly, the microprocessor 202 may receive the configuration information via the file system interface 212 or the user interface 210. To obtain (step 402) the configuration information by inference, the microprocessor 202 may derive the configuration information by analyzing logged data based on use of the controller 120 by the cyclist. For example, a target cadence may be associated with a particular power based upon manual gear selection data. Should configuration information not be available or be incorrectly entered, the microprocessor 202 may use a default configuration information obtained from the file-system. Should a particular sensor be unavailable, functions that require the use of the particular sensor may not be available.

Example configuration information is presented in the following table:

| Parameter | Example | Reference |
|---|---|---|
| Functional Threshold Power | 300 | P8 |
| Above Threshold Capacity | 20000 | P9 |
| Calibrated Preferred Power | 300 | P11 |
| Calibrated Preferred Cadence | 91 | P10 |
| Fatigue Factor | 0.35 | P13 |
| Standing Factor | 0.65 | P14 |
| Power Weighted Rolling Average Duration | 7 | P16 |
| Cassette Cog Teeth | 28,25,23,21,19,17,15,14,13,12 | P17 |
| Chainring Teeth | 36,50 | P18 |
| Acceleration Factor | 1 | P22 |
| Deceleration Factor | 0.5 | P23 |
| Maximum Rear Derailleur Shifting Torque | 100 | P24 |
| Maximum Front Derailleur Shifting Cadence | 90 | P25 |
| Maximum Torque Allowed for Shifting from Bigger Ring to Smaller Ring | 50 | P26 |
| Maximum Torque Allowed for Shifting from Smaller Ring to Bigger Ring | 30 | P27 |
| Base Sensitivity Factor | 0.04 | P28 |
| Logarithmic Sensitivity Factor | 350 | P29 |
| Optimal Crank Rotation Angle for Gear Change | 270 | P31 |
| Play Audible Notifications | TRUE | P32 |
| Use Heart-Rate Derived Power | TRUE | P33 |
| Shift Notification Time | 400 | P34 |

The microprocessor 202 may operate in a continuous fashion by first obtaining (step 404) sensor data which may include data from the power sensor 303, the torque sensor 118, the cadence sensor 304, the crank position sensor 302, the speed sensor 308, heart-rate sensor 306 or the GPS satellite position sensor 310. Upon obtaining (step 404) this data, the microprocessor 202 may use (step 406) linear regression for determination of predicted speed to eliminate errors from the speed sensor 308. Should errors be rare, linear regression data from the speed sensor 308 may not be required.

Weighted averages may be determined from the power data coming from the power sensor 303 to allow flexibility. The parameter Power Weighted Rolling Average Duration P16 may be used to determine the number of sensor data values received to average. Using a weighted average enables more recent power data to provide a greater influence on the choice of power data to use in calculations. A smaller number may indicate that the microprocessor 202 is to use power data from the power sensor 303 that is more recent whereas a larger number may indicate that the microprocessor 202 is to use power data from the power sensor 303 that have been received over a longer period. The former may result in more frequent adjustments and more rapid response to changing needs whereas the latter may enable fewer changes and lessens the impact of spikes and drops in power data.

Linear regression of speed data from the speed sensor 308 may be used to determine (step 408) a predicted speed through determinations of acceleration and deceleration and applying those determinations together with the current speed from the speed sensor 308, which may, together, project upon which speed an optimum gear ratio could be determined. The anticipated speed determination (step 408) performed by the microprocessor 202 may involve use of the Acceleration Factor P22 and/or Deceleration Factor P23. The Acceleration Factor P22 and/or Deceleration Factor P23 may project how far into the future should the predicted speed be determined.

A target cadence may be determined (step 410) for a given set of circumstances through use of a relationship between the weighted average power determined in step 406 and the relationship between Calibrated Preferred Power P11 and Calibrated Preferred Cadence P10. The target cadence may be lower when lower power values from the power sensor 303 are received and higher when higher power values are received from the power sensor 303. The target cadence determination (step 410) based on these power values may aim to closely match the cyclist's preferential cadences, such that the target cadence for the Calibrated Preferred Power P11 may be the Calibrated Preferred Cadence P10. Other factors may be introduced into the relationship to provide finer-grained control over the target cadence determination (step 410), such factors may include fatigue and whether the cyclist is sensed as standing or sitting on the seat 106.

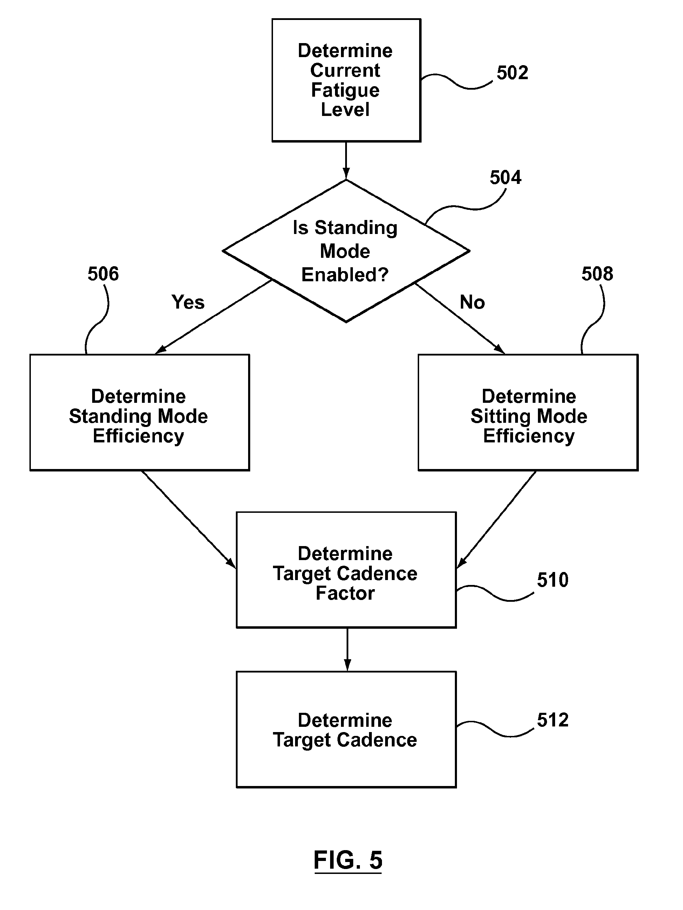

Example steps in a method for determining target cadence (step 410) are illustrated in FIG. 5. The microprocessor 202 may, initially determine (step 502) cyclist fatigue. Determining (step 502) cyclist fatigue may be based on a formula such as that which has been documented in Skiba et. al., Modeling the expenditure and reconstitution of work capacity above critical power, Med Sci Sports Exerc. 2012 Aug; 44(8):1526-32, hereby incorporated herein by reference. The following parameters may or may not be used in determining (step 502) cyclist fatigue: Functional Threshold Power P8; Above Threshold Capacity P9; Calibrated Preferred Power P11; Calibrated Preferred Cadence P10; Fatigue Factor P13; and Standing Factor P14.

The microprocessor 202 may determine (step 504) whether standing mode is enabled. Upon determining (step 504) that standing mode is enabled, the microprocessor 202 may determine (step 506) a standing mode efficiency. Upon determining (step 504) that standing mode is not enabled, the microprocessor 202 may determine (step 508) a sitting mode efficiency.

The microprocessor 202 may use the standing mode efficiency or the sitting mode efficiency when determining (step 510) a target cadence factor related to a fraction of available work capacity above functional threshold power. The target cadence factor may influence a determination (step 512) of the target cadence for the cyclist. The determination (step 512) of the target cadence may, for example, be based on measured power, configuration data and the fatigue factor determined in step 502.

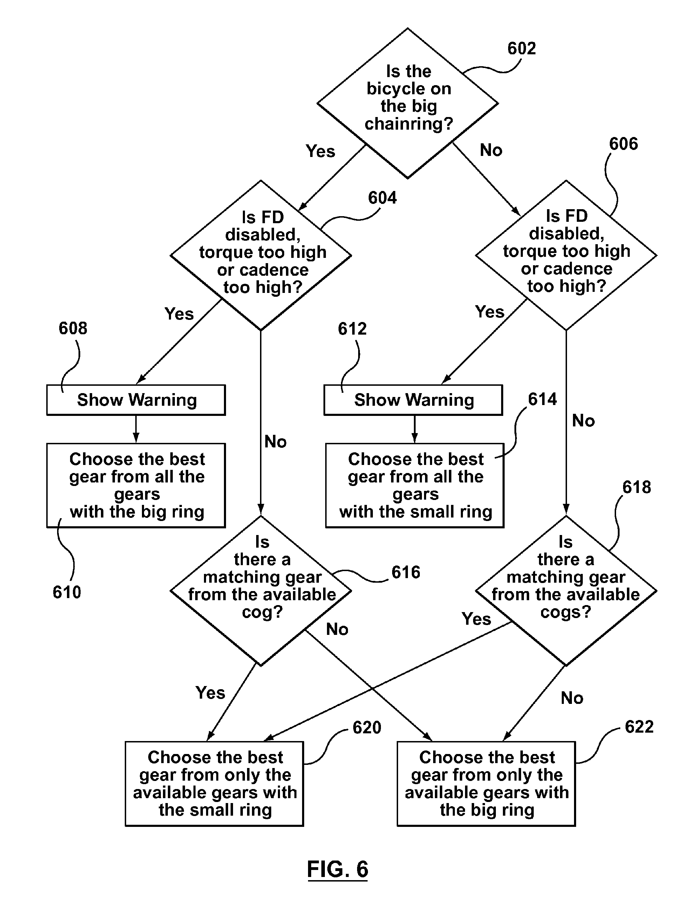

The microprocessor 202 may then determine (step 412) a gear ratio that matches the available gears on the bicycle. The determining (step 412) the gear ratio may be based on the target cadence, determined in step 410, and the predicted speed, determined in step 408. Based up on this gear ratio, a next best gear (NBG) may be determined (step 414). The choosing of gears to obtain the NBG determined in step 414 is detailed in FIG. 6.

Example steps in a method of choosing gears to obtain the next best gear is illustrated in FIG. 6. Firstly, the microprocessor 202 determines (step 602) whether the bicycle is currently operating on the big chainring or on the small chainring. The microprocessor 202 may keep track of all gear changes performed on the bicycle and store information relating to the current chainring and cassette cog in use in the RAM 204. Upon determining (step 602) that the bicycle is currently operating on the big chainring, the microprocessor 202 may then determine (step 604) whether Front Derailleur (FD) gear changes are disallowed.

FD gear changes may be disallowed based upon the cyclist pedaling too vigorously as measured by the cadence sensor 304. The qualification "too vigorously" may be translated to "at too high a cadence." That is, a measured cadence may be determined to exceed a Maximum Front Derailleur Cadence P25.

FD gear changes may be disallowed based upon the cyclist pedaling too forcefully as measured by the power/torque sensor 118. The qualification "too forcefully" may be translated to "with too high a torque." That is, a measured torque may be determined to exceed Maximum Torque Allowed for Shifting from Bigger Ring to Smaller Ring P26.

FD gear changes may be disallowed based upon the cyclist having disabled automatic FD gear changes via the user interface 210.

Responsive to determining (step 604) that FD gear changes are disallowed, the microprocessor 202 may arrange (step 608) for a warning to be shown. The warning may be shown, for example, via the display screen interface 216 on the controller 120. Subsequently, the microprocessor 202 may choose (step 610) a cog on the rear wheel cassette 116 that combines with the big chainring to provide a gear ratio close to the next best gear.

Upon determining (step 602) that the bicycle is currently operating on the small chainring, the microprocessor 202 may then determine (step 604) whether Front Derailleur (FD) gear changes are disallowed.

FD gear changes may be disallowed based upon the cyclist pedaling too forcefully as measured by the power/torque sensor 118. The qualification "too forcefully" may be translated to "with too high a torque." That is, a measured torque may be determined to exceed the Maximum Torque Allowed for Shifting from Smaller Ring to Bigger Ring P27.

Responsive to determining (step 604) that FD gear changes are disallowed, the microprocessor 202 may arrange (step 612) for a warning to be shown. The warning may be shown, for example, via the display screen interface 216 on the controller 120. Subsequently, the microprocessor 202 may choose (step 614) a cog on the rear wheel cassette 116 that combines with the small chainring to provide a gear ratio close to the next best gear.

Upon determining (step 604) that FD gear changes are allowed, then the microprocessor 202 may determine (step 616) whether the gear ratios available for the big chainring cover the gear ratio for the NBG.

Upon determining (step 616) that the gear ratios available for the big chainring cover the gear ratio for the NBG, the microprocessor 202 may choose (step 622) a cog on the rear wheel cassette 116 that combines with the big chainring to provide a gear ratio close to the next best gear.

Upon determining (step 616) that the gear ratios available for the big chainring do no cover the gear ratio for the NBG, the microprocessor 202 may choose (step 620) a cog on the rear wheel cassette 116 that combines with the small chainring to provide a gear ratio close to the next best gear.

Upon determining (step 606) that FD gear changes are allowed, then the microprocessor 202 may determine (step 618) whether the gear ratios available for the small chainring cover the gear ratio for the NBG.

Upon determining (step 618) that the gear ratios available for the small chainring cover the gear ratio for the NBG, the microprocessor 202 may choose (step 620) a cog on the rear wheel cassette 116 that combines with the small chainring to provide a gear ratio close to the next best gear.

Upon determining (step 618) that the gear ratios available for the small chainring do not cover the gear ratio for the NBG, the microprocessor 202 may choose (step 622) a cog on the rear wheel cassette 116 that combines with the big chainring to provide a gear ratio close to the next best gear.

To further refine the determination (step 414, FIG. 4) of NBG from the available gear ratios, and to prevent oscillation from one gear to another when the cyclist may be pedaling at a point where the NBG is on the border between two gears, hysteresis in gear choice is used. Sensitivity factors associated with references P28 and P29 may be used to enable the amount of hysteresis to be used in the NBG determination. Lower power levels obtained from data from the power sensor 303 may have less need for more precise gearing in comparison to higher power levels where incorrect gearing may be less desirable. Base Sensitivity Factor P28 and Logarithmic Sensitivity Factor P29 may be used to define the degree to which both lower and higher power levels are sensitive to gear changes along the border gear ratios. The increase in hysteresis at lower power values enables more comfort during easy pedaling whereas a reduction in hysteresis at higher power values enables better efficiency and performance.

Returning to FIG. 4, the microprocessor 202 may, when logging is enabled, save (step 416) data collected and determined, to a log. An example log is shown in the following table:

| Secs | Speed | Cadence | Distance | Power | Torque | Gear |
|---|---|---|---|---|---|---|
| 1 | 21 | 73 | 1 | 141 | 13 | 5014 |
| 2 | 21 | 73 | 1 | 157 | 15 | 5014 |
| 3 | 20 | 72 | 1 | 165 | 16 | 5015 |
| 4 | 20 | 72 | 1 | 169 | 16 | 5015 |
| 5 | 20 | 72 | 1 | 181 | 17 | 5015 |
| 6 | 20 | 74 | 1 | 182 | 17 | 5015 |
| 7 | 20 | 74 | 1 | 188 | 17 | 5015 |
| 8 | 20 | 75 | 1 | 200 | 18 | 5015 |
| 9 | 20 | 75 | 1 | 211 | 19 | 5015 |
| 10 | 20 | 75 | 1 | 211 | 19 | 5015 |
| 11 | 20 | 76 | 1 | 221 | 20 | 5015 |
| 12 | 20 | 76 | 1 | 221 | 20 | 5015 |
| 13 | 20 | 76 | 1 | 221 | 20 | 5015 |
| 14 | 21 | 77 | 1 | 230 | 20 | 5015 |
| 15 | 20 | 77 | 1 | 217 | 19 | 5015 |
| 16 | 21 | 77 | 1 | 217 | 19 | 5015 |
| 17 | 21 | 77 | 1 | 204 | 18 | 5015 |
| 18 | 20 | 77 | 1 | 196 | 17 | 5017 |
| 19 | 20 | 80 | 1 | 187 | 16 | 5017 |
| 20 | 20 | 80 | 1 | 184 | 16 | 5017 |
| 21 | 20 | 85 | 1 | 202 | 16 | 5015 |
| 22 | 20 | 85 | 1 | 212 | 17 | 5015 |
| 23 | 20 | 85 | 1 | 228 | 18 | 5015 |
| 24 | 20 | 78 | 1 | 271 | 24 | 5017 |
| 25 | 20 | 78 | 1 | 274 | 24 | 5017 |
| 26 | 20 | 78 | 1 | 274 | 24 | 5017 |
| 27 | 20 | 80 | 1 | 272 | 23 | 5017 |
| 28 | 20 | 80 | 1 | 260 | 22 | 5017 |
| 29 | 20 | 82 | 1 | 252 | 21 | 5017 |

The microprocessor then determines (step 418) whether the gears need to change. Responsive to the microprocessor 202 determining (step 418) that the NBG is different than the current gear, the microprocessor 202 processes (step 420) the gear change.

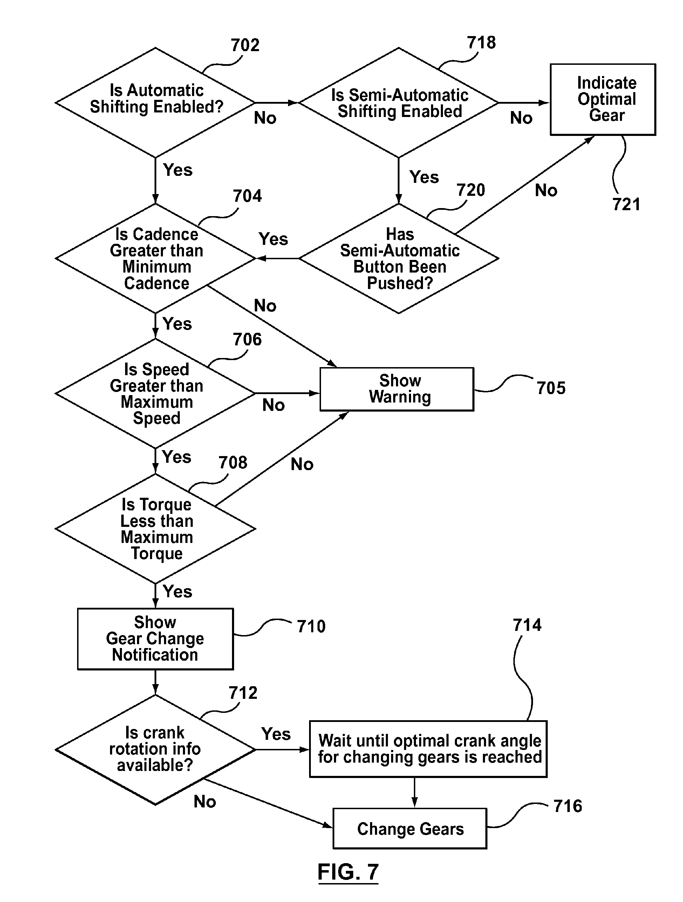

Example steps in a method of processing (step 420) a gear change are illustrated in FIG. 7. Using user input buttons on the controller 120, automatic shifting may be enabled or disabled. Similarly, using user input buttons on the controller 120, semi-automatic shifting may be enabled or disabled. Automatic and semi-automatic shifting may not be simultaneously enabled.

Responsive to determining (step 702) that automatic shifting is enabled, the microprocessor 202 may assess whether conditions exist for a gear change to occur. For one example, the microprocessor 202 may determine (step 704) whether the measured cadence is greater than a minimum cadence. For another example, the microprocessor 202 may determine (step 706) whether the measured speed is greater than a minimum speed. For a further example, the microprocessor 202 may determine (step 708) whether the measured torque is less than a maximum torque.

Upon assessing (steps 704, 706, 708) that conditions exist for a gear change to occur, the microprocessor 202 may arrange (step 710) display of a notification, via the display interface 216, that a gear change is about to occur.

Upon assessing (steps 704, 706, 708) that conditions exist for a gear change to occur, the microprocessor 202 may arrange (step 710) an audible sound to be played that a gear change is about to occur.

The microprocessor 202 may determine (step 712) that crank rotation information is available. Under conditions wherein the crank arm position sensor 302 has been installed, data from the crank position sensor 302 may be received and the microprocessor 202 may wait (step 714) until angular point data from the crank position sensor 302 has been received indicating that the optimal crank angle P31 has been reached. The microprocessor 202 may, alternatively, determine (step 712) that crank rotation information is not available. Crank angle may be determined, even in the absence of the crank position sensor 302, through use of the cadence sensor 304. Indeed, the timestamp on the moment at which the data from cadence sensor 304 may be used as a reference point in the pedaling cycle. Subsequently, based on measured cadence, the microprocessor 202 may predict when the right crank arm 114R (for example) will be at a particular angle.

Upon determining (step 714) that the optimal crank angle P31 has been reached or upon determining (step 712) that crank rotation information is not available, the microprocessor 202 may transmit (step 716), to the electronic shifting system 312, an instruction to change to the NBG.

Responsive to determining (step 702) that automatic shifting is enabled, the microprocessor 202 may determine (step 718) whether semi-automatic shifting is enabled.

When the cyclist has enabled semi-automatic shifting, the execution of a given gear change may happen when the cyclist indicates the gear change by pushing a button that informs the microprocessor 202 that a gear change is requested. Upon determining (step 720) that a gear change has been requested, the microprocessor 202 may assess (steps 704, 706, 708) whether conditions exist for a gear change to occur and may either arrange (step 705) display of a warning or proceed (step 710, 712, 714 and 716) to arrange a gear change, as discussed hereinbefore in the case of automatic shifting.

Upon determining (step 718) that semi-automatic shifting has not been enabled, the microprocessor 202 may control (step 721) the display, via the display interface 216, of an optimal gear to which the cyclist should manually switch. The microprocessor 202 may also arrange (step 721) display of an optimal gear responsive to, under conditions wherein semi-automatic shifting has been enabled, but the microprocessor 202 has not determined (step 720) that a gear change has been requested.

When coming to a hill, for example, or if a sprint is about to ensue, the cyclist may choose to prevent FD gear changes from occurring and the automatic front derailleur shifting may be toggled from on to off.

When climbing a hill or if the cyclist would like to pedal out-of-the-saddle, the saddle sensor 122 may be used to indicate to the microprocessor 202 to change target cadence determination (step 410, FIG. 4) to use a formula better suited to cadences when standing. If the saddle sensor 122 is not installed, the cyclist may toggle standing mode on and off via an input button.

Up to this point, the controller 120 has been described as a purpose-built device. However, it should be understood that a more generic computing device (a smart phone, a cycling computer) may be programmed appropriately to carry out elements of the present application.

The above-described implementations of the present application are intended to be examples only. Alterations, modifications and variations may be effected to the particular implementations by those skilled in the art without departing from the scope of the application, which is defined by the claims appended hereto.

## Claims

1. A method of advising gear changes for a multi-geared, pedal-operated vehicle comprising:
obtaining (402) configuration data specific to a rider of the multi-geared, pedal-operated vehicle, the configuration data including a configuration cadence associated with a given power;
receiving (404) sensor data, the sensor data including:
sensor data representative of measured speed;
sensor data representative of measured power;
determining (502), based on the configuration data and the sensor data, a fatigue factor;
determining (408), based on the sensor data representative of the measured speed, a predicted speed;
determining (410), based on the measured power, the configuration data and the fatigue factor, a target cadence;
determining (412), based on the target cadence and the predicted speed, a target gear ratio;
determining (414), based on the target gear ratio and on available gears, a change in gearing;
controlling a display to indicate (721) the change in gearing; and
controlling an audio device to indicate (721) the change in gearing.

2. The method of claim 1 wherein the obtaining comprises receiving the configuration information via a file system interface.

3. The method of claim 1 wherein the obtaining comprises deriving the configuration information by analyzing sensor data.

4. The method of claim 1 further comprising:
determining, based on the measured power, an amount of hysteresis to apply to the current gear ratio in operation; and
determining whether to remain in the current gear based on the amount of hysteresis.

5. The method of claim 1 further comprising:
receiving first further sensor data representative of multi-geared, pedal-operated vehicle operating variables; and
further basing the determining the fatigue factor on the first further sensor data.

6. The method of claim 1 further comprising:
receiving second sensor data representative of a physiological state of the rider; and
further basing the determining the fatigue factor on the second further sensor data.

7. The method of claim 6 wherein the second sensor data comprises heart rate sensor data.

8. The method of claim 1 further comprising:
receiving sensor data representative of crank angle; and
transmitting, to a gearing control system for the multi-geared, pedal-operated vehicle, a command to implement a change in the chainring and cog combination only upon sensing a particular crank angle.
